# EUROPEAN PATENT SPECIFICATION

(11) **EP 2 813 137 B1**
(45) Date of publication and mention of the grant of the patent: **20.01.2016**
(21) Application number: 13172193.8
(22) Date of filing: 15.06.2013
(51) Int. Cl.: A01F 25/13, A01F 25/16

(54) **Drapable cover, silo and ensilage method**
Drapierbare Abdeckung, Silo und Siloverfahren
Couverture enroulable, silo et procédé d'ensilage

(43) Date of publication of application: 17.12.2014
(73) Proprietor: Mathijssen, Johannes Adrianus Wilhelmus Maria, 4873 LW Etten-Leur (NL)
(72) Inventor: Mathijssen, Johannes Adrianus Wilhelmus Maria, 4873 LW Etten-Leur (NL)
(74) Representative: Doolaar, Frans

(56) References cited:
- DE-B3-102005 027 500
- DE-U1- 29 720 390
- FR-A1- 2 824 994
- GB-A- 2 455 076

## Description

### Technical field

The invention relates to a cover for ensilage, a silo and an ensilage method, as known from for instance FR 2824994.

### Background

Ensilage is a commonly used method for having on fodder available at farms in winter time. The silage, i.e. the product of ensilage is fermented stored fodder. The silage can be fed to ruminants (cud-chewing animals such as cattle and sheep) or used as a biofuel feedstock for anaerobic digesters.

For instance in the Netherlands, silage is made by placing cut green vegetation in a silo. A known silo has two opposing concrete side walls defining a rectangular silo. Between the two opposing walls, there is a flat, concrete floor. Before filling the silo with fresh crop, a piece of canvas is placed over each wall such that a part of the first canvas lies on the concrete floor along the length of the wall. After filling, the two pieces of canvas are folded over the crop and over each other. For optimal the fermenting and storing the crop is covered with a watertight cover such that it is prevented that rain drains from between the pieces of canvas and the walls and then underneath the canvas into the silage, two additional pieces of canvas are used, one for each wall. A first additional canvas is placed over the first wall and the already prevent canvas. A second additional canvas is placed over the second wall, the already present canvas and over the first additional canvas. To prevent that wind disturbs the watertight closure and that gas from the fermenting process opens a gap between the overlying parts of the different pieces of canvas, the silo is covered by heavy bulk material. The heavy bulk material may be formed by a considerable amount of sand or old car tires.

Because the first and second additional pieces of canvas need to close the gap between the walls and the first and second canvas, they have to extend over the wall. This however precludes that a second silo is located directly besides the silo, using one of the walls of the silo as its own wall. This is because rain captured by the first or second additional piece of canvas would be drained to the second silo.

It is desirable to be able to use two silos next to each other, sharing a side wall.

The object of the invention is reached by a cover for ensilage, comprising a drapable sheet and a tubular drain extending along an edge of the drapable sheet and having a main axis in that direction, the tubular drain being arranged to allow water to enter the tubular drain from a direction perpendicular to the axis and for draining it in a direction parallel to the main axis.

Because the drapable sheet has a tubular drain on the edge, in use the drain can be placed on the silo floor in the corner where the wall and the silo floor meet. In use, rain on the drapable sheet will flow to the drain and be drained out of the silo.

In an embodiment of the invention wherein the diameter of the tubular drain is larger than the thickness of the drapable sheet, the cover comprises a further drapable sheet with a further edge provided with a further tubular drain at the further edge, the further tubular drain having a further diameter larger than the thickness of the further drapable sheet, the drapable sheet and the further drapable sheet being provided with means to strap the drapable sheet to the further drapable sheet while exerting a pulling force.

Because the diameter of the tubular drain is larger than the thickness of the drapable sheet, the weight of the silage pressing on the tubular drain keeps the tubular drain fixed even if the means to strap the drapable sheet to the further drapable sheet exert a pulling force on the drapable sheet.

Similarly, because the further drain has a larger diameter than the thickness of the further drapable sheet, the weight of the silage pressing on the further drain keeps the further drain fixed even if the means exert a pulling force on the further drapable sheet. When the drapable sheet is strapped to the further drapable sheet, the drapable sheet and the further drapable sheet apply pressure to the silage. This is advantageous for the highest layer of crop, as the ensilage depends on the pressure in the silage and this pressure is applied by the drapable sheet and the further drapable sheet. Lower layers of crop also are under pressure of the weight of the crop on top of it. Because the drapable sheet and the further drapable sheet apply pressure to the silo, there is no need to load the silo with heavy bulk material such as sand or car tires

In an embodiment of the invention, the drapable sheet and the further drapable sheet are made from watertight material.

Because the drapable sheet and the further drapable sheet are watertight, in use water on the drapable sheet will flow to the drain and in use water on the further drapable sheet will flow to the further drain. This keeps water (for instance from rain) out of the silage which is advantageous for the ensilage and prevents rotting of the silage.

In an embodiment of the invention, there is provided a silo comprising a first side wall, a second side wall and a third side wall, the first side wall and the second side wall defining a first compartment and the third side wall and the second side wall defining a second compartment, the first compartment comprising the cover according to the invention.

Because the first compartment and the second compartment share a wall, the second side wall, the costs for the silo are relatively cheap.

According to an embodiment of the invention, there is provided an ensilage method comprising the steps of
- draping a first part of a cover for ensilage over a first side wall of a silo, the first part comprising a first drapable sheet and a first tubular drain extending along a first edge of the first drapable sheet and having a main axis in that direction, the tubular drain being arranged to allow water to enter the tubular drain from a direction perpendicular to the main axis and for draining it in a direction parallel to the main axis, wherein the first part is placed such that the tubular drain is in the corner between the first wall and a floor of the silo;
- draping a second part of the cover over a second side wall of the silo, the second part comprising a second drapable sheet and a second tubular drain extending along a second edge of the second drapable sheet and having a further main axis in that direction, the second tubular drain being arranged to allow water to enter the tubular drain from a direction perpendicular to the further main axis and for draining it in a direction parallel to the further main axis, wherein the second part is draped such that the second tubular drain is in the corner between the second side wall and the floor;
- filling the silo with material which is to be processed into silage
- covering the material to be processed into silage with the first part of the cover and the second part of the cover.

Because the first tubular drain and the second tubular drain allow (rain)water to enter from the side and are placed in the corners of the respective side walls and the floor of the silo, they will drain (rain)water that has fallen onto the silo from the cover.

According to an embodiment of the invention wherein the diameter of the first tubular drain is larger than the thickness of the first drapable sheet and wherein the diameter of the second tubular drain is larger than the thickness of the second drapable sheet, the method furher comprises
- strapping the first drapable sheet to the second drapable sheet such that the first drapable sheet is under tension of a pull towards the second side wall and the second drapable sheet is under tension of a pull towards the first side wall.

Because the diameter of the first tubular drain is larger than the thickness of the first drapable sheet, the weight of the silage pressing on the tubular drain keeps the tubular drain fixed even if the means to strap the drapable sheet to the further drapable sheet exert a pulling force on the drapable sheet.

Similarly, because the further drain has a larger diameter than the thickness of the further drapable sheet, the weight of the silage pressing on the further drain keeps the further drain fixed even if the means exert a pulling force on the further drapable sheet. When the drapable sheet is strapped to the further drapable sheet, the drapable sheet and the further drapable sheet apply pressure to the silage. This is advantageous for the highest layer of crop, as the ensilage depends on the pressure in the silage and this pressure is applied by the drapable sheet and the further drapable sheet. Lower layers of crop also are under pressure of the weight of the crop on top of it. Because the drapable sheet and the further drapable sheet apply pressure to the silo, there is no need to load the silo with heavy bulk material such as sand or car tires.

According to a further embodiment, the ensilage method comprises using a first drapable sheet of watertight material and a second drapable sheet of watertight material.

Because the first drapable sheet and the second drapable sheet are of watertight material and because the (rain)water falling onto the cover is drained via the first tubular drain and second tubular drain, no further watertight sheeting is needed.

Examples of embodiments the invention will now be described with reference to the accompanying schematic drawings. Corresponding reference symbols in the schematic drawings indicate corresponding parts. The schematic drawings are not necessarily to scale and certain features may be exaggerated to better illustrate and explain the present invention. Further, the examples are not intended to be exhaustive or otherwise limit or restrict the invention to the precise configurations shown in the drawings and disclosed in the following detailed description.
- Figure 1: shows a cross section of a silo without silage
- Figure 2: shows a cross section of a silo with silage inside
- Figure 3: shows a first part of an ensilage cover with tubular drain
- Figure 4: shows a second part of an ensilage cover with tubular drain
- Figure 5: shows a cross section of a silo with 2 compartments

### Detailed description

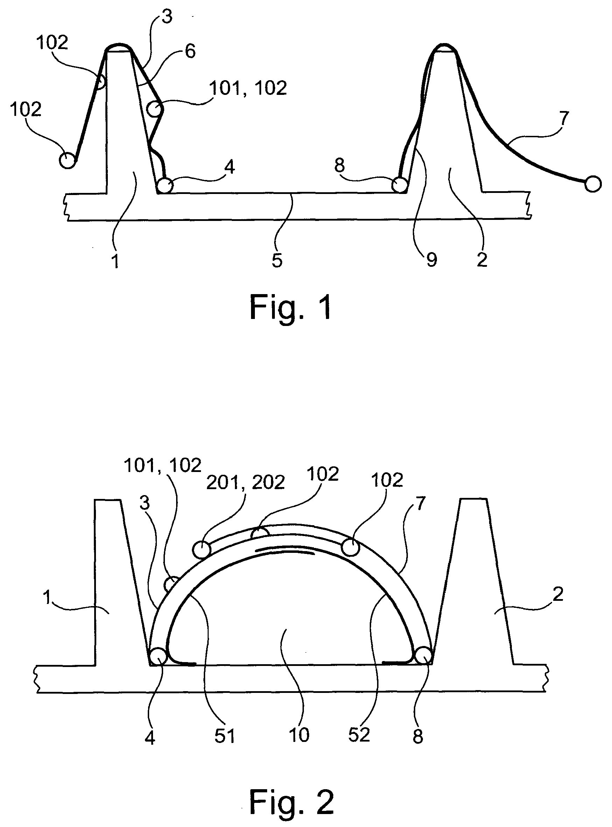

Different stages of ensilage according to the invention will now be described. A silo according to the invention comprises a first side wall (1) with a first length and a second side wall (2) having a second length(figure 1). The first side wall (1) and the second side wall (2) oppose each other along their length directions. The first side wall and the second side wall may be made of concrete or stone. Between the first side wall (1) and the second side wall (2) there is a floor (5), which may be concrete as well. The floor (5) for instance is flat. In the direction from the first wall (1) to the second wall (2) it may be levelled. Preferably in the direction of a load opening of the silo, the concrete floor is slightly tilted downward. The first side wall and the second side wall are typically between 30 and 100 m long. The floor (5) is typically between 5 and 24 meters wide. The first side wall (1) and the second side wall (2) are typically 0,8 to 3 m high. As the skilled person will understand, the dimensions will vary widely even outside the given numbers in practise.

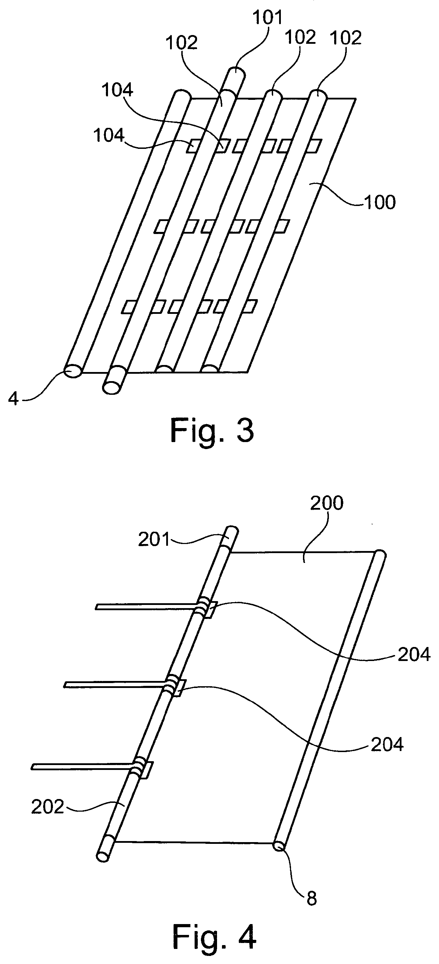

A first drapable sheet (3) is draped over the first side wall (1). The first drapable sheet (3) forms a part of a first part (100) of a cover. The first part (100) of the cover and the first drapable sheet (3) have a rectangular shape (figure 3). The longest direction of the first cover is parallel to the direction of the length of the first side wall (1). The drapable sheet material may be from a breathable cloth, such as a breathable nonwoven or woven fabric. Along a first edge of the first drapable sheet, the first cover comprises a first tubular drain (4) with a first main axis extending along the first edge. The tubular drain is arranged to drain along the main axis which may be achieved by positioning it not exactly level, such as on the silo floor (5). The first tubular drain (4) is arranged to allow water (for instance from rain) to enter the tubular drain from the direction perpendicular to the first main axis, i.e. from the side. For this reason the first tubular drain (4) may comprise a plurality of holes (not shown) to allow rainwater to enter the tubular drain. The tubular drain is rolled into the first drapable sheet (3).

The first tubular drain (4) is placed in the corner between an inner surface (6) of the first concrete wall (1), such that rain flowing down along the first drapable sheet can flow into the first tubular drain (4). The first tubular drain extends along the length of the first side wall (1). The diameter of the first tubular drain is larger than the thickness of the first drapable sheet (3).

The first part (100) of the cover further comprises a first pull element (101), which has an elongated form and is of a material more rigid than the first drapable sheet (3). The first pull element (101) may be a metal bar or pipe. The first pull element is attached to the side facing the first side wall (1). The first pull element is attached to the first drapable sheet (3) by running it through a first tunnel (102) extending in the direction parallel to the first edge. The first cover may also comprise a plurality of parallel first tunnels (102). The first tunnel or one of the first tunnels may be on a further edge of the first drapable sheet (3), the further edge being the edge parallel to the first edge.

In a similar way, a second part (200) of the cover comprises a second drapable sheet (7) and a second tubular drain (8) along a second edge of the second drapable sheet. The second part (200) of the cover is also rectangular and the second edge is one of the two longer edges (figure 4). The second drapable sheet (7) is draped over the second side wall (2). The second tubular drain (8) has a second main axis extending along the second edge. The second tubular drain (8) is arranged to allow water (for instance rainwater) to enter the second tubular drain (8) from the direction perpendicular to the second main axis, i.e. from the side. For this purpose the second tubular drain (8) may comprise a further plurality of holes (not shown) to allow rainwater to enter the tubular drain. The tubular drain is rolled into the second drapable sheet (7). The second tubular drain is placed in the corner between a further inner surface (9) of the second side wall (2). The diameter of the second tubular drain is larger than the thickness of the second drapable sheet (7).

The second part (200) of the cover further comprises a second pull element (201). The second pull element may be a long, relatively unbendable product, such as a bar or a pipe and extends along a further second edge which is parallel to the second edge and forms one of the longer edges of the rectangular shaped second part (200) of the cover. The second pull element (201) may run through a second tunnel (202) formed by the second drapable sheet along the further second edge.

A first drapable watertight sheet (51) is placed over the first drapable sheet (3) such that it partially covers the floor (5) of the silo and such that it extends over the top of the first side wall (1) (not shown in figure 1). A second drapable watertight sheet (52) is placed over the second drapable sheet (7) such that it partially covers the floor (5) and such that it extends over the top of the second side wall. The second drapable watertight sheet is not shown in figure 1.

In a next stage, the silo is filled with a layer of crop (10) which by fermenting will turn into silage fodder. This is shown in figure 2. The crop may be grass crops, including maize, sorghum or other cereals and may be formed from the entire green plant (i.e. not just the grain). Examples are ordinary grasses, clovers, alfalfa, vetches, oats, rye and maize.

Then the first drapable watertight sheet and the second drapable watertight sheet are folded over the layer of crop such that the end that earlier extended over the top of the first and second side walls overlap each other.

As a further step, the first drapable sheet (3) is folded over first drapable watertight sheet and next the second drapable sheet (7) is folded over second watertight sheet to partly overlap the first drapable sheet (3) at the end furthest away from the second tubular drain (8). Then the first pull bar and the second pull bar are pulled to each other using a plurality of straps and buckles which are not shown in figures 1,2 and 5. The plurality of straps may be attached to the first cover such that each has an end that runs in a loop around the first pull bar via openings (104) and is then sewn onto itself. The second cover may comprise a second plurality of openings (204) through which the straps may be looped and comprise buckles to fasten the straps while applying a pulling force to pull the first pull bar and the second pull bar to each other. The straps may also be of other known types, such as those for instance the types used to secure load onto a truck.

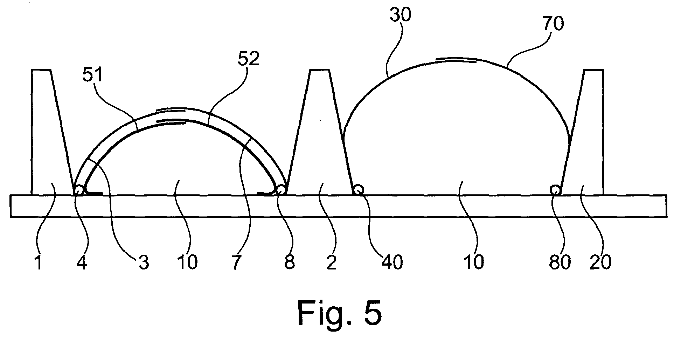

Next to the second wall (2) there is a third wall (20) running parallel to the second wall. This is shown in figure 5. The third wall and second wall define a second compartment just as the first wall and the second wall define a first compartment. The arrangement of the further compartment is similar to that of the first compartment and is used for the same purpose. For instance, the third wall may be of concrete or stone. Obviously the combined ensilage capacity is larger than that of only the first or second compartment.

As an example, as sketched in figure 5 the second compartment is filled to a higher extend than the first compartment: the silage is stacked higher. Similar to the first compartment, the silage in the second compartment is covered by a second cover comprising a third drapable sheet (30) and a forth cover comprising a forth drapable sheet (70). A third tubular drain (40) is attached to a third edge of the third drapable sheet (30). A forth tubular drain (80) is attached to a forth edge of the forth drapable sheet.

However, third and forth drapable sheet are themselves from watertight material. The watertight material may for instance be from drapable plastic sheeting or rubbery materials.

As the third and forth drapable sheet are watertight, there are no additional separate watertight sheets in the second compartment. In this case, the third tubular drain (40) and the forth tubular drain (80) are not rolled into respectively the third and forth drapable sheet but for instance glued to them. Alternatively, the third edge of the third drapable sheet and the forth edge of the forth drapable sheet may be thicker than the sheet material. The thicker parts are placed within a rail extending along the length of the third tubular drain (40) and the forth tubular drain (80). The fit within the rails is a watertight fit of any suitable type.

In an embodiment the first pull element and the second pull element are much shorter than the length of the silo. The length of the first pull element and the second pull element corresponds with the portion of the silage that is taken out in for instance a day. This makes that the silo can be opened only at the ensilage to be used within short notice, while keeping the rest of the ensilage under pressure. To arrange this, the first pull bar and the second pull bar are in opposing positions in the tunnel.

## Claims

1. Cover for ensilage, comprising a drapable sheet (3,7) and a tubular drain (4,8) extending along an edge of the drapable sheet and having a main axis in that direction, the tubular drain being arranged to allow water to enter the tubular drain from a direction perpendicular to the axis and for draining it in a direction parallel to the main axis **characterized by** the diameter of the tubular drain (4) being larger than the thickness of the drapable sheet (3), the cover comprising a further drapable sheet (7) with a further edge provided with a further tubular drain (8) at the further edge, the further tubular drain having a further diameter larger than the thickness of the further drapable sheet, the drapable sheet and the further drapable sheet being provided with means to strap the drapable sheet to the further drapable sheet while exerting a pulling force.

2. Cover according to claims 1, wherein the drapable sheet and the further drapable sheet are made from watertight material.

3. Silo comprising a first side wall (1) a second side wall (2) and a third side wall, the first side wall and the second side wall defining a first compartment and the third side wall and the second side wall defining a second compartment, the first compartment comprising the cover according to claim 1 or 2.

4. Ensilage method comprising
- draping a first part (100) of a cover for ensilage over a first side wall (1) of a silo, the first part comprising a first drapable sheet (3) and a first tubular drain (4) extending along a first edge of the first drapable sheet and having a main axis in that direction, the tubular drain being arranged to allow water to enter the tubular drain from a direction perpendicular to the main axis and for draining it in a direction parallel to the main axis and for draining it in a direction parallel to the main axis, wherein the first part is placed such that the tubular drain is in the corner between the first wall and a floor (5) of the silo;
- draping a second part (200) of a cover for ensilage over a second side wall (2) of the silo, the second part (200) comprising a second drapable sheet (7) and a second tubular drain (8) extending along a second edge of the second drapable sheet and having a further main axis in that direction, the second tubular drain being arranged to allow water to enter the tubular drain from a direction perpendicular to the further main axis and for draining it in a direction parallel to the further main axis, wherein the second part is draped such that the tubular drain is in the corner between the second side wall and the floor;
- filling the silo with material (10) which is to be processed into silage;
- covering the material to be processed into silage with the first part of the cover and the second part of the cover.

5. Ensilage method according to claim 4 wherein the diameter of the first tubular drain is larger than the thickness of the first drapable sheet and wherein the diameter of the second tubular drain is larger than the thickness of the second drapable sheet, comprising
- strapping the first drapable sheet (3) to the second drapable sheet (7) such that the first drapable sheet is under tension of a pull towards the second side wall (2) and the second drapable sheet (7) is under tension of a pull towards the first side wall (1).

6. Ensilage method according to claim 4 or 5, comprising
- using a first drapable sheet (3) of watertight material and a second drapable sheet (7) of watertight material.

## Patentansprüche

1. Abdeckung für Silage, die eine drapierbare Plane (3, 7) und einen rohrförmigen Entwässerungsabfluss (4, 8), der sich entlang einer Kante der drapierbaren Plane erstreckt und in dieser Richtung eine Hauptachse aufweist, umfasst, wobei der rohrförmige Entwässerungsabfluss derart angeordnet ist, dass er dem Wasser ermöglicht, in den rohrförmigen Entwässerungsabfluss aus einer Richtung, die senkrecht zu der Achse ist, einzutreten und in einer Richtung, die parallel zu der Hauptachse ist, abzufließen, **dadurch gekennzeichnet, dass** der Durchmesser des rohrförmigen Entwässerungsabflusses (4) größer als die Dicke der drapierbaren Plane (3) ist, wobei die Abdeckung eine weitere drapierbare Plane (7) mit einer weiteren Kante umfasst, die mit einem weiteren rohrförmigen Entwässerungsabfluss (8) an der weiteren Kante versehen ist, wobei der weitere rohrförmige Entwässerungsabfluss einen weiteren Durchmesser aufweist, der größer als die Dicke der weiteren drapierbaren Plane ist, wobei die drapierbare Plane und die weitere drapierbare Plane mit Mitteln versehen sind, um die drapierbare Plane an der weiteren drapierbaren Plane festzubinden, während eine Ziehkraft ausgeübt wird.

2. Abdeckung nach Anspruch 1, wobei die drapierbare Plane und die weitere drapierbare Plane aus einem wasserdichten Material hergestellt sind.

3. Silo, das eine erste Seitenwand (1), eine zweite Seitenwand (2) und eine dritte Seitenwand umfasst, wobei die erste Seitenwand und die zweite Seitenwand eine erste Kammer definieren und die dritte Seitenwand und die zweite Seitenwand eine zweite Kammer definieren, wobei die erste Kammer die Abdeckung nach Anspruch 1 oder 2 umfasst.

4. Silageverfahren, das Folgendes umfasst:
- Drapieren eines ersten Teils (100) einer Abdeckung für eine Silage über einer ersten Seitenwand (1) eines Silos, wobei der erste Teil eine erste drapierbare Plane (3) und einen ersten rohrförmigen Entwässerungsabfluss (4), der sich entlang einer ersten Kante der ersten drapierbaren Plane erstreckt und in dieser Richtung eine Hauptachse aufweist, umfasst, wobei der rohrförmige Entwässerungsabfluss derart angeordnet ist, dass er dem Wasser ermöglicht, in den rohrförmigen Entwässerungsabfluss aus einer Richtung, die senkrecht zu der Hauptachse ist, einzutreten und in einer Richtung, die parallel zu der Hauptachse ist, abzufließen und in einer Richtung, die parallel zu der Hauptachse ist, abzufließen, wobei der erste Teil derart angeordnet ist, dass der rohrförmige Entwässerungsabfluss in der Ecke zwischen der ersten Wand und einem Boden (5) des Silos liegt;
- Drapieren eines zweiten Teils (200) einer Abdeckung für eine Silage über einer zweiten Seitenwand (2) des Silos, wobei der zweite Teil (200) eine zweite drapierbare Plane (7) und einen zweiten rohrförmigen Entwässerungsabfluss (8), der sich entlang einer zweiten Kante der zweiten drapierbaren Plane erstreckt und in dieser Richtung eine weitere Hauptachse aufweist, umfasst, wobei der zweite rohrförmige Entwässerungsabfluss derart angeordnet ist, dass er dem Wasser ermöglicht, in den rohrförmigen Entwässerungsabfluss aus einer Richtung, die senkrecht zu der weiteren Hauptachse ist, einzutreten und in einer Richtung, die parallel zu der weiteren Hauptachse ist, abzufließen, wobei der zweite Teil derart drapiert ist, dass der rohrförmige Entwässerungsabfluss in der Ecke zwischen der zweiten Seitenwand und dem Boden des Silos liegt;
- Auffüllen des Silos mit Material (10), das zu Silage verarbeitet werden soll;
- Abdecken des Materials, das mit dem ersten Teil der Abdeckung und mit dem zweiten Teil der Abdeckung zu Silage verarbeitet werden soll.

5. Silageverfahren nach Anspruch 4, wobei der Durchmesser des ersten rohrförmigen Entwässerungsabflusses größer als die Dicke der ersten drapierbaren Plane ist und wobei der Durchmesser des zweiten rohrförmigen Entwässerungsabflusses größer als die Dicke der zweiten drapierbaren Plane ist, und wobei das Verfahren Folgendes umfasst:
- Festbinden der ersten drapierbaren Plane (3) an die zweite drapierbare Plane (7) derart, dass die erste drapierbare Plane unter Spannung einer Zugwirkung in Richtung der zweiten Seitenwand (2) steht und dass die zweite drapierbare Plane (7) unter Spannung einer Zugwirkung in Richtung der ersten Seitenwand (1) steht.

6. Silageverfahren nach Anspruch 4 oder 5, das Folgendes umfasst:
- Verwenden einer ersten drapierbaren Plane (3) aus einem wasserdichten Material und einer zweiten drapierbaren Plane (7) aus einem wasserdichten Material.

## Revendications

1. Elément de recouvrement pour ensilage, comprenant une feuille pouvant être drapée (3, 7) et un drain tubulaire (4, 8) s'étendant le long d'une arête de la feuille pouvant être drapée et présentant un axe principal dans cette direction, le drain tubulaire étant agencé pour permettre à l'eau d'entrer dans le drain tubulaire depuis une direction perpendiculaire à l'axe et pour la drainer dans une direction parallèle à l'axe principal, **caractérisé par** le diamètre du drain tubulaire (4) étant plus grand que l'épaisseur de la feuille pouvant être drapée (3), l'élément de recouvrement comprenant une feuille pouvant être drapée supplémentaire (7) avec une arête supplémentaire dotée d'un drain tubulaire supplémentaire (8) sur l'arête supplémentaire, le drain tubulaire supplémentaire présentant un diamètre supplémentaire plus grand que l'épaisseur de la feuille pouvant être drapée supplémentaire, la feuille pouvant être drapée et la feuille pouvant être drapée supplémentaire étant dotées de moyens pour attacher la feuille pouvant être drapée à la feuille pouvant être drapée supplémentaire tout en exerçant une force de traction.

2. Elément de recouvrement selon la revendication 1, dans lequel la feuille pouvant être drapée et la feuille pouvant être drapée supplémentaire sont réalisées en un matériau étanche à l'eau.

3. Silo comprenant une première paroi latérale (1), une deuxième paroi latérale (2) et une troisième paroi latérale, la première paroi latérale et la deuxième paroi latérale définissant un premier compartiment et la troisième paroi latérale et la deuxième paroi latérale définissant un second compartiment, le premier compartiment comprenant l'élément de recouvrement selon la revendication 1 ou 2.

4. Procédé d'ensilage comprenant
- le drapage d'une première partie (100) d'un élément de recouvrement pour l'ensilage sur une première paroi latérale (1) d'un silo, la première partie comprenant une première feuille pouvant être drapée (3) et un premier drain tubulaire (4) s'étendant le long d'une première arête de la première feuille pouvant être drapée et présentant un axe principal dans cette direction, le drain tubulaire étant agencé pour permettre à l'eau d'entrer dans le drain tubulaire depuis une direction perpendiculaire à l'axe principal et pour la drainer dans une direction parallèle à l'axe principal, dans lequel la première partie est placée de sorte que le drain tubulaire soit dans le coin entre la première partie et un plancher (5) du silo ;
- le drapage d'une seconde partie (200) d'un élément de recouvrement pour l'ensilage sur une seconde paroi latérale (2) du silo, la seconde partie (200) comprenant une seconde feuille pouvant être drapée (7) et un second drain tubulaire (8) s'étendant le long d'une seconde arête de la seconde feuille pouvant être drapée et présentant un axe principal supplémentaire dans cette direction, le second drain tubulaire étant agencé pour permettre à l'eau d'entrer dans le drain tubulaire depuis une direction perpendiculaire à l'axe principal supplémentaire et pour la drainer dans une direction parallèle à l'axe principal supplémentaire, dans lequel la seconde partie est drapée de sorte que le drain tubulaire soit dans le coin entre la seconde paroi latérale et le plancher ;
- le remplissage du silo avec du matériau (10) qui doit être ensilé ;
- l'élément de recouvrement du matériau à ensiler avec la première partie de l'élément de recouvrement et la seconde partie de l'élément de recouvrement.

5. Procédé d'ensilage selon la revendication 4, dans lequel le diamètre du premier drain tubulaire est plus grand que l'épaisseur de la première feuille pouvant être drapée et dans lequel le diamètre du second drain tubulaire est plus grand que l'épaisseur de la seconde feuille pouvant être drapée, comprenant
- l'attache de la première feuille pouvant être drapée (3) à la seconde feuille pouvant être drapée (7) de sorte que la première feuille pouvant être drapée soit sous tension d'une traction vers la seconde paroi latérale (2) et la seconde feuille pouvant être drapée (7) soit sous tension d'une traction vers la première paroi latérale (1).

6. Procédé d'ensilage selon la revendication 4 ou 5, comprenant
- l'utilisation d'une première feuille pouvant être drapée (3) d'un matériau étanche à l'eau et d'une seconde feuille pouvant être drapée (7) de matériau étanche à l'eau.
